Europäisches Patentamt

European Patent Office

Office européen des brevets

(11) Publication number: **0 177 337**
**B1**

(12) **EUROPEAN PATENT SPECIFICATION**

(45) Date of publication of patent specification: **28.12.88**

(51) Int. Cl.⁴: **B 28 D 1/18**

(21) Application number: **85307026.6**

(22) Date of filing: **01.10.85**

(54) **A hub for a concrete saw blade.**

(30) Priority: **05.10.84 US 658362**

(43) Date of publication of application:
**09.04.86 Bulletin 86/15**

(45) Publication of the grant of the patent:
**28.12.88 Bulletin 88/52**

(84) Designated Contracting States:
**BE CH DE FR GB IT LI NL SE**

(56) References cited:
**EP-A-0 050 233**
**DE-A-3 149 903**
**GB-A-1 215 064**
**US-D- 25 410**

**SOVIET INVENTIONS ILLUSTRATED, section
P,Q, week 83/32, September 21, 1983,
DERWENT PUBLICATIONS LTD., London, P64**

**SOVIET INVENTIONS ILLUSTRATED, section
P,Q, week B 44, December 12, 1979, DERWENT
PUBLICATIONS LTD., London, P61**

(73) Proprietor: **Hogue, John J.**
**11586 Monroe Way**
**Thornton Colorado 80233 (US)**

(72) Inventor: **Hogue, John J.**
**11586 Monroe Way**
**Thornton Colorado 80233 (US)**

(74) Representative: **Taylor, Derek George et al
Mathisen, Macara & Co. The Coach House 6-8
Swakeleys Road
Ickenham Uxbridge UB10 8BZ (GB)**

## Description

This invention relates to a hub for supporting a flush-cut concrete saw and for supplying coolant to the saw.

Circular saws have been made for many years that are capable of making a cut adjacent a planar surface like a wall, a floor or ceiling. However, such saws are made to cut wood and other relatively soft materials where air cooling of the blade is entirely adequate.

It is known from British Patent Specification No. 1,215,064 to provide a diamond-edged cutting tool capable of making a flush cut. However, due to its construction, only the teeth at its outer peripheral edge contact the workpiece and the coolant is delivered to this cutting edge exclusively with none going to the centre of the blade. The result of this is, of course, to confine the cooling action to the toothed area while ignoring other parts of the blade.

Similarly, it is known from U.S. Patent Specification No. Re 25,410 to provide a ring-shaped grinding wheel having diamond cutter segments around its outer periphery, and mount it on a composite support comprising a hub secured by screws to a mounting plate, an inturned water collar secured by screws to the rear face of the mounting plate, the plate having apertures around its periphery through which water within the collar can flow to the forward face of the mounting plate and thence centrifugally to the cutting segments. Thus again, this does not involve a large circular face in rotational engagement with the surface of the stone being worked.

The saw blades for cutting concrete in common use today are, for the most part, flat circular steel ones between approximately 100/1000ths and 200/1000ths of an inch (2.5 to 5.0 mm) thick to which diamond particles and dust are adhesively-attached to form the tips located at spaced intervals along the periphery. These blades are rotated at high speeds and if they get too hot, the adhesive that has been used to attach the diamond tips to the blade edge melts thus causing the diamond tips to fly off. Directing a liquid coolant to the outer periphery of the blade generally provides an adequate solution to this problem.

Another consequence of overheating is very appreciable shortening of blade life by as much as 75% to 80%.

There remains, however, yet another problem that is not solved by the prior art liquid blade cooling systems. During the manufacturing process, the steel blades are pretreated before the diamond tips are added so that they become what is known as "tensioned". This tensioning process prestresses the blades such that they remain flat during use and run true. Unfortunately, if the area at the centre of the blade becomes overheated, it will lose its tension and the internal stresses held in check by such tension will take over and cause it to distort, become wavy much like a potato chip and, as a result, bind up in the saw cut. Moreover, the load on the blade is greatest at its centre where the mandrel is attached and, therefore, if this area of the blade gets hot, stress cracks begin to develop and it could, conceivably, break free with the attendant disasterous consequences.

Applicant has discovered that, with a flush-mounted blade that is turning at high speed closely adjacent the planar surface along which the cut is being made, the area immediately around the hub becomes very hot, and the blade becomes distorted and binds up. Furthermore, directing coolant against the adjacent side of the blade remote from the wall, floor or other surface along which the cut is being sawed does not provide adequate cooling and serious overheating is the result.

According to the present invention there is provided a hub suitable for releasably mounting a diamond-edged circular concrete saw blade, and suitable for distributing coolant liquid to the remote face of the saw, wherein a cup-shaped member has a forwardly-facing blade-receiving surface bordering and closely adjacent a central depression therein, said blade-receiving surface is arranged to border a central opening in the saw blade and receive fasteners entering from the remote face thereof attaching the near face of said blade thereto, so that the blade rotates in flush face-to-face essentially contacting relation to a planar surface of the concrete located opposite said remote face, said cup-shaped member also has a rearwardly-facing surface with an axial bore therethrough opening into the depression, for receiving a drive shaft, and an annular groove in the rearwardly-facing surface extending around said axial bore, said depression being of a depth such as to house the end of the drive shaft emerging therein together with the means connecting said shaft and member together in recessed relation to the forwardly-facing blade-receiving surface, and a plurality of passages extending through said cup-shaped member connect the groove to the front face of said member opposing the planar surface and wherein said annular groove is shaped on the radially outer periphery thereof to define an annular fluid-retaining pocket arranged to receive coolant liquid delivered thereto and retain the liquid under the influence of centrifugal forces acting thereagainst when said member is rotated at high speed, and wherein the passages are located in an exposed portion of said member positioned between the forwardly-facing blade-receiving surface thereof and the central depression therein that borders the central opening in the blade and does not project beyond its remote face, said passages being capable of conducting coolant liquid from the annular pocket under the influence of the centrifugal forces and distributing the liquid on to said remote blade face adjacent its central opening.

Dependent Claims 2 to 9 concern preferred embodiments and additional features of the invention.

The claimed invention will now be particularly described, by way of example, with reference to the accompanying drawings in which:—

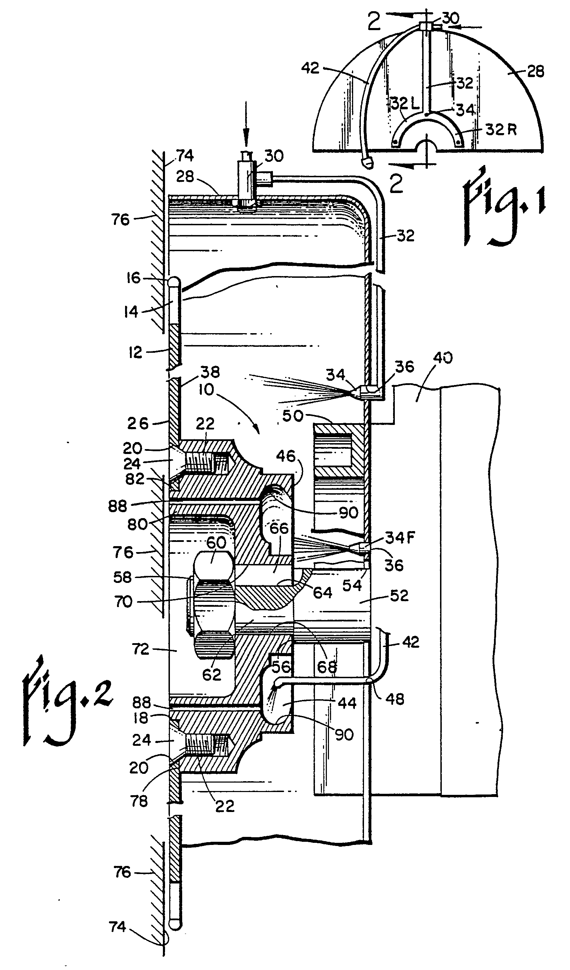

Figure 1 is an elevational view of part of a circular saw assembly, suitable for containing a hub according to the invention, and showing the coolant fluid distribution system, associated with a blade guard and a gear housing, for simultaneously spraying water as a coolant on to both the near and the remote blade surfaces at points closely adjacent its axis of rotation; and

Figure 2 is a diametrical section taken along line 2—2 of Figure 1, but on a greatly enlarged scale, showing the hub design which picks up the coolant water and delivers it to the remote face of the blade even while the latter lies flush up against a working surface, portions of the construction having been broken away for greater clarity.

As shown in the drawings, the hub, which is a cup-shaped member 10, is used to mount a circular saw blade 12 in flush relation to a working surface such that it can make a cut in parallel alignment therewith. The blade is circular and planar in accordance with conventional design. It has a plurality of teeth 14 spaced around its periphery that are covered and coated with an adhesively-attached abrasive material 16, usually diamond dust or particles. The blade 12 also has a large central opening 18 and a plurality of countersunk bolt holes 20 arranged in angularly-spaced relation around the outside of the latter for attaching it to the hub. As far as modifications to the conventional diamond-tipped saw blade are concerned, they consist mainly of providing it with these countersunk bolt holes such that the mounting bolts 22 with their frusto-conical heads 24 can be recessed and thus lie flush with its remote face 26 as shown.

Concrete saws, even the small diameter ones, must be cooled by spraying them with a coolant liquid, usually water. The large diameter blades, i.e. those capable of making cuts over about 12 inches (30 cm) deep, require special cooling in the area of the centre opening where the previously-mentioned stress cracking and warpage can take place. In the usual situation where both the near and remote faces 26 of the blade are readily accessible, it becomes a simple matter to direct sprays of a coolant liquid thereagainst issuing from stationary nozzles attached to the blade guard or other suitable supporting structure. Such a coolant distribution system has been illustrated in Figure 1.

As shown in Figure 1, the blade guard or housing 28 covers all but the working area of the blade which, in the particular attitude of the guard shown, would project therebeneath. In the top of this guard is a manifold 30 the inlet of which is connectable to a supply of coolant under pressure, such as a garden hose. Pipe 32 takes water from the outlet of the manifold along the outside of the guard to a first nozzle 34 fastened within an aperture 36 in the guard located to spray the coolant on to the near face 38 of the blade closely adjacent the area where it emerges from behind the hub 10 as seen in Figure 2. In the specific form illustrated, a pair of branch coolant lines 32L and 32R take water from line 32 and deliver to it left and right auxiliary nozzles 34F respectively, positioned alongside the gear housing 40. All of the coolant distribution system just described is conventional and forms no part of the present invention. In other than flush-mounted blade assemblies, it would also include provision for spraying water on to the remote face 26 of the blade which, of course, would be readily accessible. This is not the case, however, with the instant flush-mounted blade because there is no room left for the lines and nozzles needed to get water on to its remote face.

The novel aspects of the present invention have to do with the cooling of the remote face 26 of the blade, not the near face 38. For this purpose, a branch line 42 seen in Figure 2 is connected to receive water from manifold 30 and opens into an annular groove 44 located in the rear end 46 of hub 10. In the particular form illustrated, pipe 42 passes into the blade guard 28 through an opening 48 in its sidewall. Gear housing 40 and U-shaped casing 50 form part of the drive mechanism for the saw. These housing elements are fastened together with bolts (not shown) that secure the blade guard in position between the two as illustrated. Although, as illustrated, line 42 passes through housing 40 and casting 50, the line 42 could be rerouted through the blade guard in such a way that it would not have to pass through either of these conventional saw parts.

Output shaft 52 enters the blade guard through opening 54 in the latter within which it turns freely. Shaft 52 is of the stepped type having a forwardly-facing annular shoulder 56 against which the rear face 46 of the hub abuts as shown. Shaft 52 terminates at its forward end in a threaded section 58 on to which nut 60 is screwed to hold the hub in place. Located between threaded section 58 and the shoulder 56 is a section of reduced diameter 62 that is grooved as indicated at 64 to receive a spline 66. The central bore 68 in hub 10 is similarly grooved as shown at 70 to receive spline 66. Thus, shaft 52 and hub 10 turn relative to the blade guard 28 and the drive subassembly elements 40 and 50 previously referred to, and in particular the annular groove 44 in the hub turns relative to the coolant fluid line 42 that delivers water thereto.

The front end of hub 10 is deeply recessed as shown at 72 to define a pocket which houses the threaded end of the shaft and the nut 60 screwed on the latter so that neither projects on to the remote face 26 of the saw blade, which face must be left free to ride along the opposed surface 74 of the work indicated at 76 in face-to-face flush relation. The forwardly-facing blade-receiving surface 78 of the hub is recessed by an amount equal to the thickness of the blade 14 as shown. Bordering the surface 78 is an exposed portion 80 which is encirlced by an annular shoulder 82 adapted to fit into the central opening 18 in the blade and maintain it in centred relation.

Finally, passages 88 pass through the hub and connect the annular groove 44 therein with an exposed portion 80 of the hub 10 forming part of the front face thereof positioned between the forwardly-facing blade-receiving surface 78 and the central depression 72 that borders the central opening 18 in the blade 12 and does not project beyond its remote face. As seen in Figure 2, the outer periphery of the annular groove 44 is deeply concave at 90 so as to define an annular fluid-retaining pocket into which the coolant liquid will be whirled centrifugally as the blade and hub are rotated at high speed. The liquid in this concave annular pocket will, in turn, be forced centrifugally through the passages 88 on to the front face of the hub right at the point where the blade attaches thereto and where the stress cracking is going to take place if this area is not kept cool. Centrifugal force will move the liquid issuing from passages 88 on to that area of the blade immediately adjacent the central opening 18 therein. The adjacent working surface 74 keeps the coolant trapped and in place up against the remote face 26 of the blade where it remains effective because, otherwise, much of the liquid would fly away and escape before it could be effective. After cooling the area around the hub, the liquid quickly migrates out to the periphery of the blade where it does the customary job of cooling the teeth 14. By trapping the liquid between the remote face of the blade and the opposed face 74 of the work, it becomes possible to even make a horizontal cut through a wall along a floor without the fluid issuing from passages 88 gravitating away.

## Claims

1. A hub suitable for releasably mounting a diamond-edged circular concrete saw blade, and suitable for distributing coolant liquid to the remote face of the saw, wherein a cup-shaped member (10) has a forwardly-facing blade-receiving surface (78) bordering and closely adjacent a central depression (72) therein, said blade-receiving surface (78) is arranged to border a central opening (18) in the saw blade (12) and receive fasteners (22) entering from the remote face (26) thereof attaching the near face of said blade (12) thereto, so that the blade (12) rotates in flush face-to-face essentially contacting relation to a planar surface (74) of the concrete located opposite said remote face (26), said cup-shaped member also has a rearwardly-facing surface (46) with an axial bore (68) therethrough opening into the depression (72), for receiving a drive shaft (52), and an annular groove (44) in the rearwardly-facing surface (46) extending around said axial bore (68), said depression (72) being of a depth such as to house the end of the drive shaft (52) emerging therein together with the means (58, 60) connecting said shaft (52) and member (10) together in recessed relation to the forwardly-facing blade-receiving surface (78), and a plurality of passages (88) extending through said cup-shaped member connect the groove (44) to the front face of said member (10) opposing the planar surface (74) and wherein said annular groove (44) is shaped on the radially outer periphery thereof to define an annular fluid-retaining pocket (90) arranged to receive coolant liquid delivered thereto and retain the liquid under the influence of centrifugal forces acting thereagainst when said member (10) is rotated at high speed, and wherein the passages (88) are located in an exposed portion (80) of said member (10) positioned between the forwardly-facing blade-receiving surface (78) thereof and the central depression (72) therein that borders the central opening (18) in the blade (12) and does not project beyond its remote face (26), said passages (88) being capable of conducting coolant liquid from the annular pocket (90) under the influence of the centrifugal forces and distributing the liquid on to said remote blade face (26) adjacent its central opening (18).

2. A hub according to Claim 1 characterised in that the forwardly-facing blade-receiving surface (78) is planar.

3. A hub according to Claim 1 characterised in that said exposed portion (80) of the member comprises a ledge projecting forwardly of the forwardly facing blade-receiving surface (78) by a distance approximating to the thickness of a blade, said exposed portion (80) and the forwardly-facing blade-receiving surface (78) are separated from one another by a shoulder, and said shoulder is of a size and shape to fit into the central opening in the blade and maintain the blade centred with respect to its axis of rotation.

4. A hub according to Claim 1 characterised in that each of the passages (88) has an inlet which opens in the annular groove at a level below the upper edge of the pocket (90) therein when the passage occupies its lowermost position and the axis of blade rotation is horizontal.

5. A hub according to Claim 1 characterised in that the annular groove (44) together with the concave periphery of the latter cooperate to define a generally doughnut-shaped cavity.

6. A hub according to Claim 1 characterised in that at least three passages (88) are arranged in substantially equiangularly-spaced relation around the axis of blade rotation.

7. A hub according to Claim 3 characterised in that the exposed portion (80) is substantially planar and coplanar with the remote face of the blade when said blade and hub are in assembled relation.

8. A hub according to Claim 4 characterised in that the passages (88) lie in substantially parallel relation to one another and to the axis of rotation.

9. A hub according to Claim 4 characterised in that the inlet and outlet of each passage (88) are so oriented with respect to one another that liquid contained in the annular groove (44) will gravitate from the inlet to the outlet when said passage occupies the aforesaid lowermost position.

**Patentansprüche**

1. Nabe, geeignet zum abnehmbaren Anbringen eines Diamant-Betonkreissägeblattes und geeignet zum Verteilen einer Kühlflüssigkeit auf die abgewendete Seite der Säge, wobei ein glokkenförmiges Bauteil (10) eine nach vorne gerichtete Sägeblattaufnahmefläche (78) aufweist, die ein mittlere Vertiefung (72) darin umgibt und eng an ihr anliegt wobei die erwähnte Sägeblattaufnehmefläche (78) so angeordnet ist, daß sie eine Mittelöffnung (18) um Sägeblatt (12) umgibt und Schraubenbolzen (22) aufnimmt, die von der abgewendeten Seite (26) hiervon eingeführt werden und die zugewendete Seite des erwähnten Sägeblattes (12) hieran befestigen, sodaß das Sägeblatt (12) sich in einem planbündigen, im wesentlichen aufliegenden Verhältnis zu einer ebenen Fläche (74) des Betons dreht, die sich gegenüber der erwähnten abgewendeten Seite (26) befindet, wobei das erwähnte glockenförmige Bauteil auch eine rückwärts gerichtete Oberfläche (46) mit einer axialen Bohrung (68) hierdurch, die in die Vertiefung (72) mündet, um eine Antriebswelle (52) aufzunehmen, eine ringförmige Nut (44) in der rückwärts gerichteten Oberfläche (46), die sich um die erwähnte axiale Bohrung (68) herum erstreckt, wobei die erwähnte Verteifung (72) eine derartige Teife hat, daß sie das dort hineinragende Ende der Antriebswelle (52) zusammen mit der Vorrichtung (58, 60), die die erwähnte Welle (52) und das Bauteil (10) zusammen verbindet, in einem versenkten Verhältnis zu der nach vorne gerichteten Sägeblattaufnahmefläche (78) aufnimmt, und eine Vielzahl von Durchgängen (88) aufweist, die sich durch das erwähnte glockenförmige Bauteil erstrecken, um die Nut (44) mit der Vorderseite des erwähnten Bauteils (10) gegenüber der ebenen Fläche (74) zu verbinden, und wobei die erwähnte ringförmige Nut (44) derart auf der radial äußeren Randfläche hiervon geformt ist, daß sie eine ringförmige Flüssigkeitsaufnahmenische (90) beschreibt, die so angeordnet ist, daß sie die Kühlflüssigkeit aufnimmt, die dort eingebracht wird, und die Flüssigkeit unter dem Einfluß von Fliehkräften zurückhält, die darauf wirken, wenn sich das erwähnte Bauteil (10) mit hohen Drehzahlen dreht, und wobei sich die Durchgänge (88) in einem freiliegenden Abschnitt (80) des erwähnten Bauteils (10) befinden, der zwischen der nach vorne gerichteten Sägeblattaufnahmefläche (78) hiervon und der mittleren Verteifung (72) hierin gelegen ist, die die Mittelöffnung (18) des Sägeblattes (12) umgibt und nicht über ihre abgewendete Seite (26) hinausragt, wobei die erwähnten Durchgänge (88) in der Lage sind, unter dem Einfluß der Fliehkräfte Kühlflüssigkeit aus der ringförmigen Nische abzuleiten und die Flüssigkeit auf die erwähnte abgewendete Sägeblattseite (26) neben ihrer Mittelöffnung (18) zu verteilen.

2. Nabe gemäß dem Patentanspruch 1, gekennzeichnet, dadurch, daß die nach vorne gerichtete Sägeblattaufnahmefläche (78) eben ist.

3. Nabe gemäß dem Patentanspruch 1, gekennzeichnet dadurch, daß der erwähnte freiliegende Abschnitt (80) des Bauteils einen vorstehenden Rand umfaßt, der von der nach vorne gerichteten Sägeblattaufnahmefläche (78) um einen Abstand hervorragt, welcher der Stärke eines Sägeblattes nahekommt, wobei der erwähnte freiliegende Abschnitt (80) und die nach vorne gerichtete Sägeblattaufnahmefläche (78) durch eine Schulter voneinander getrennt sind und die erwähnte Schulter von einer Größe und Form ist, daß sie in die Mittelöffnung des Sägeblattes paßt und das Sägeblatt in Bezug auf seine Drehachse mittig hält.

4. Nabe gemäß dem Patentanspruch 1, gekennzeichnet dadurch daß jeder der Durchgänge (88) einen Einlaß aufweist, der auf einer Höhe unterhalb der Oberkante der Nische (90) darin in die ringförmige Nut mündet, wenn der Durchgang seine unterste Lage einnimmt und die Sägeblatt-Drehachse sich in waagerechter Stellung befindet.

5. Nabe gemäß dem Patentanspruch 1, gekennzeichnet dadurch, daß die ringförmige Nut (44) zusammen mit ihrem hohlem Außenrand einen im großen und ganzen ringröhrenförmigen Hohlraum beschreibt.

6. Nabe gemäß dem Patentanspruch 1, gekennzeichnet, dadurch, daß mindestens drei Durchgänge (88) in einem im wesentlichen gleichwinklig abstehenden Verhältnis um die Sägeblatt-Drehachse herum angeordnet sind.

7. Nabe gemäß dem Patentanspruch 3, gekennzeichnet, dadurch, daß der freiliegende Abschnitt (80) im wesentlichen eben ist und in derselben Ebene wie die abgewendete Fläche des Sägeblattes liegt, wenn das erwähnte Sägeblatt und die Nabe sich in einem zusammengebauten Zustand befinden.

8. Nabe gemäß dem Patentanspruch 4, gekennzeichnet dadurch, daß die Durchgänge (88) sich zueinander und zur Drehachse in einem im wesentlichen parallel Verhältnis befinden.

9. Nabe gemäß dem Patentanspruch 4, gekennzeichnet dadurch, daß der Einlaß und der Auslaß jedes Durchgangs (88) derart zueinander augerichtet sind, daß die in der ringförmigen Nut (44) enthaltene Flüssigkeit durch die Schwerkraft vom Einlaß zum Auslaß fließt, wenn der erwähnte Durchgang die zuvor erwähnte unterste Lage einnimmt.

**Revendications**

1. Moyeu convenant au montage amovible d'une lame de scie à béton circulaire à bord diamanté et convenant à la distribution de liquide de refroidissement à la face éloigné ou face externe de la scie, dans lequel une pièce (10) en forme de godet possède une surface (78) réceptrice de lame dirigée vers l'avant, surface. qui borde et est située à proximité d'un creux central (72) dans cette pièce, la surface réceptrice de lame (78) est agencée pour border une ouverture centrale (18) de la lame de scie (12) et pour recevoir des éléments de fixation (22) pénétrant depuis la face externe (26) de la lame et fixant la face interne de la lame (12) à surface réceptrice, de manière que la lame (12) tourne en position affleurée face à face et pratiquement en contact avec une surface plane (74) du béton située en regard de la face externe (26), la pièce en forme de godet possède également une surface (46) dirigée vers l'arrière et traversée par un alésage axial (68) qui débouche dans le creux (72) et est destiné à recevoir un arbre d'entraînement (52), ainsi qu'une gorge annulaire (44) ménagée dans la surface (46) dirigée vers l'arrière et s'étendant autour de l'alésage axial (68), le creux (72) ayant une profondeur permettant le logement de l'extrémité de l'arbre d'entraînement (52) émergeant dans ce creux, ensemble avec les moyens (58), (60) reliant l'arbre (52) et la pièce (10) ensemble en position encastrée par rapport à la surface réceptrice de lame (78) dirigée vers l'avant, de même que des passages (88) qui traversant la pièce en forme de godet et relient la gorge (44) à la face frontale de la pièce (10) située en regard de la surface de béton plane (74), dans lequel la gorge annulaire (44) est conformée, dans sa périphérie radialement extérieure, de manière à définir une poche annulaire (90) de retenu de fluide, poche qui est agencée pour recevoir du liquide refroidissement délivré à elle et pour retenir le liquide sous l'influences des forces centrifuges agissant sur ce liquide lorsque la pièce (10) est animée d'une rotation à grande vitesse, et dans lequel les passages (88) sont situés dans une partie exposée (80) de la pièce (10), parie qui se trouve entre la surface réceptrice de lame (78) dirigée vers l'avant de la pièce et le creux central (72) ménagé dans cette pièce et qui borde l'ouverture centrale (18) de la lame (12), la partie exposée ne faisant pas saillie de la face externe (26) de la lame, les passages (88) étant capables de conduire du liquide de refroidissement depuis la poche annulaire (90), sous l'influence des forces centrifuges, et de distribuer le liquide à la face externe (26) de la lame à proximité de son ouverture centrale (18).

2. Moyeu selon la revendication 1, caractérisé en ce que la surface réceptrice de lame (78) dirigée vers l'avant est plane.

3. Moyeu selon la revendication 1, caractérisé en ce que la partie exposée (80) de la pièce est constituée par une moulure faisant saillie vers l'avant, par rapport à la surface réceptrice de lame (78) dirigée vers l'avant, d'une distance corrspondant approximativement à l'épaisseur d'une lame, la partie exposée (80) et la surface réceptrice de lame (78) étant séparées l'une de l'autre par un épaulement et cet épaulement étant dimensionné et conformé pour s'ajuster dans l'ouverture centrale de la lame et pour maintenir la lame centrée par rapport à son axe de rotation.

4. Moyeu selon la revendication 1, caractérisé en ce que chacun des passages (88) à une entrée qui débouche dans la gorge annulaire à un niveau situé sous le bord supérieur de la poche (90) dans cette gorge lorsque le passage occupe sa position la plus basse et l'axe de rotation de la lame est horizontal.

5. Moyeu selon la revendication 1, caractérisé en ce que la gorge annulaire (44) et sa périphérie concave coopèrant pour définir une cavité ayant une forme générale toroïdale.

6. Moyeu selon la revendication 1, caractérisé en ce que trois passages (88) au moins sont disposés avec un espacement sensiblement équiangulaire autour de l'axe de rotation de la lame.

7. Moyeu selon la revendication 3, caractérisé en ce que la partie exposée (80) est sensiblement plane et située dans le même plan que la face externe de la lame lorsque la lame et le moyeu sont assemblés.

8. Moyeu selon la revendication 4, caractérisé en ce que les passages (88) sont sensiblement parallèles entre eux et à l'axe de rotation.

9. Moyeu selon la revendication 4, caractérisé en ce que l'entrée et la sortie de chaque passage (88) sont orientées l'une par rapport à l'autre de manière que du liquide contenu dans la gorge annulaire (44) s'écoule par gravité de l'entrée à la sortie lorsque le passage occupe la position la plus basse précitée.

Fig. 1

Fig. 2